# EUROPEAN PATENT APPLICATION

(11) **EP 4 609 703 A1**
(43) Date of publication of application: **03.09.2025**
(21) Application number: 25160776.8
(22) Date of filing: 28.02.2025
(51) Int. Cl.: A01G 31/00, A01G 31/02, G05B 13/04, G06N 3/08, G06N 3/09, G06N 20/00, G06Q 10/04, G06Q 50/02, G06Q 50/10

(54) **METHOD OF CONTROLLING CONDITIONS FOR A CONTROLLED HYDROPONIC SYSTEM**

(30) Priority: 01.03.2024 CZ 20240079
(71) Applicant: Sensorie s.r.o., 60200 Brno (CZ)
(72) Inventor: Bazout, David, 58001 Havlickuv Brod (CZ)
(74) Representative: Tomickova, Dana

(57) **Abstract**

The object of the invention is a method of controlling conditions for a controlled hydroponic system (10). Data from sensors (6) of a training hydroponic system (9) environment are processed by an artificial intelligence model (8), wherein the result is an approximation of the additive volume for the nutrient solution (2). The trained artificial intelligence model (8) in the controlled hydroponic environment (10) determines the additive volume to be added to the nutrient solution (2).

## Description

### Technical Field

The invention relates to agricultural production in greenhouses, particularly to adjusting growing conditions in a hydroponic system based on easily measurable data describing the state of the plant or environment that affects the growth of the plants.

### Background of the Invention

Hydroponic plant growing is one of the promising methods of modern agriculture. The basic component of a hydroponic system is usually a nutrient solution reservoir, a circulation pump, and hydroponic arms. The nutrient solution is transported by the circulation pump to the highest placed arm, from which it flows back to the reservoir through the system due to gravity.

Perforated cups filled with a growing medium are placed in the openings of the hydroponic arms to provide support to the plants being grown. At the beginning of the growing process, seeds of the plants being grown are placed in the growing medium. The plant being grown absorbs all the substances necessary for its development from the nutrient solution, i.e. water enriched with fertilizers.

The current techniques of nutrient solution quality measurement can be divided into manual and automated. In the case of manual techniques, the grower performs manual measurements of pH and EC parameters using hand-held measuring instruments at predefined regular intervals (e.g. in the morning and in the evening). Based on the measured values, they perform a manual adjustment by adding the appropriate doses of additives. The parameter measurement and the actual dosing usually need to be repeated, as without specialized control models, the exact response of the system to the added additives cannot be determined. It is a method of adjustment suitable especially for hobby implementations of a smaller scale, because the cost of the acquisition of the given instruments is not high compared to the price of the system.

In the case of automated dosing the quality of the nutrient solution is continuously measured using specialized probes that are permanently immersed in the nutrient solution reservoir. If the permissible limits of any of the measured parameters are exceeded, an automatic response occurs in the form of addition of a small dose of additive, which is transported to the nutrient solution from the reservoir using a peristaltic pump. Thus, the levels of both parameters are continuously adjusted to predefined limits.

The automated method of dosing is characterized by a minimal time requirement for the operator of the given system. The operator may be required to have certain technical knowledge regarding the proper handling and maintenance of the measuring probes. This method of adjustment is characteristic especially of industrial implementations, because the acquisition value as well as the operation of the industrial pH and EC probes for continuous measurement is a costly issue, which, however, makes economic sense in larger-scale implementations. A barrier to hobby applications can be the aforementioned technical knowledge, which is necessary for the use of industrial probes.

Efforts to automate the adjustment of the hydroponic growing environment has also been made by the author of the patent application IN202321039419 A. The object of the solution is a prediction of the nutrient adjustment in a nutrient solution using loT based on data from sensors. The system is powered by a solar panel and comprises a pH meter, conductometer, NPK (nitrogen, phosphorus, potassium content) sensor, TDS (dissolved mineral content) sensor, oxygen content sensor, thermometer. In this configuration, however, it is unsuitable for smaller private greenhouses due to the acquisition price and the necessary user education.

In the document US20230143014 A1, a system for controlling the growing conditions in a greenhouse based on data from sensors, such as image data, temperature data, luminosity data, is described. The control system creates data models with the help of artificial intelligence, based on which the greenhouse settings are automatically changed. However, for hydroponic systems, it must comprise also pH and nutrient solution conductivity sensors.

The Korean application KR20220117620 A then presents an evaluation of the state of plants in a greenhouse by means of artificial intelligence based on image data - i.e. it takes into account inputs such as leaf color, plant size, leaf inclination, etc. A similar principle is used in the solution presented in the application WO2019237200 A1.

The Korean patent KR102486456 B1 describes controlling of conditions in a larger number of data-connected greenhouses. The data collected in the individual greenhouses are compared and evaluated in the cloud using artificial intelligence. Both the sensory data themselves, such as temperature, weather state, CO2 content, etc., are evaluated, as well as data from the given greenhouse management strategy, i.e. what action is applied in the greenhouse and how the greenhouse conditions have changed based on this action. From this information, data sets are created, which are then used by the control system to control the conditions in the individual greenhouses based on similarity to past environmental data. This is a demonstration of the use of artificial intelligence and neural networks in a growing environment, however, it is not applicable in small private greenhouses due to the complexity of the hardware and software equipment.

The Korean patent KR102301629 B1 discloses a method of adjusting a nutrient solution in a hydroponic system based on automatic control of sensory data from both the greenhouse environment and the nutrient solution, based on which and using a neural network it predicts the state of the nutrient solution. However, even this solution is not suitable for small private greenhouses, as it places demands on the hardware and the expertise of the user, and above all it does not provide automatic adjustment of the nutrient solution, which is required in small private greenhouses, as the owner may not always be present.

In the article Performance Analysis of Time Series Deep Learning Models for Climate Prediction in Indoor Hydroponic Greenhouses at Different Time Intervals (Oybek Eraliev and Chul-Hee Lee, available at https://www.mdpi.com/2223-7747/12/12/2316), the author presents the possibility of predicting the climatic conditions in a hydroponic greenhouse and mentions that based on different deep-learning models, it is possible to set the conditions in the greenhouse and, among other things, even set the nutrient solution pump and thus the volume change of this solution in the hydroponic system. In this solution, the authors predict only the climate in the greenhouse, not the state of the nutrient solution, and also they cannot change the state of the solution.

From the above, it follows that it would be useful to provide a solution that could automate the control of hydroponic growing systems based on easily available data.

### Summary of the Invention

The above shortcomings are to a certain extent eliminated by a method of controlling conditions for a controlled hydroponic system using at least one artificial intelligence model, which comprises the steps of
i. obtaining a data set in a training hydroponic system, wherein the data set comprises time dependence of the data obtained by at least one sensor and volumes of at least one additive added to the nutrient solution;
ii. processing the data set by at least one artificial intelligence model, wherein the result is an approximation function of the volume of the at least one additive;
iii. obtaining data using the at least one sensor in the controlled hydroponic system;
iv. processing the data obtained in step *iii* using an artificial intelligence model, wherein the result is an approximated volume of the at least one additive;
v. adding the volume of the at least one additive to the nutrient solution in the controlled hydroponic system, wherein this volume is determined in step *iv.*

The method is based on the assumption that plants respond to the surrounding environment in a similar manner, and thus in that case, after obtaining sufficient data, an algorithm can be programmed to evaluate the external plant condition and adjust the state of the nutrient solution based on these data. At present, it is possible to apply pH and conductivity sensors and analyzers to determine the quantitative composition of the nutrient solution in a greenhouse, but this is a very financially demanding solution for use in a home greenhouse and, on top of that, requires a relatively high level of expertise of the user. In contrast, the present method of the invention requires only standard, not financially demanding sensors and evaluation application that controls a peristaltic pump that can deliver pH and conductivity adjusting substances to the nutrient solution.

The correct composition of the nutrient solution is a basic prerequisite for successful hydroponic growing. The basic metrics describing the composition of the nutrient solution are electrical conductivity (EC) and acidity (pH). The flow of electric current through a liquid is characterized as a directed movement of positive ions (cations) to the negative electrode and negative ions (anions) to the positive electrode. The electrical conductivity parameter therefore informs the grower about the amount of dissolved mineral substances that the nutrient solution contains.

The pH scale specifies the ratio of the concentration of hydrogen ions (H+) and hydroxide ions (OH-) dissolved in a solution and its values range from 0-14. A neutral solution has a pH value equal to 7, solutions with a lower pH value react acidically and solutions with a value higher than 7 react in an alkaline way. The pH parameter therefore specifies the way in which the nutrient solution interacts with the plant's root system.

On the leaves of the plants, water evaporates through tiny pores on the surface of the leaves. This evaporation creates a vacuum in the leaf tissue, which in turn causes a pulling force for water and nutrients that are absorbed by the plant's root system. An inappropriate pH level of the nutrient solution causes the absorption of the mineral substances in a toxic ratio, resulting in an improper development of the plant. A too low amount of the nutrients results in an insufficient growth and development of the plants, in the opposite case, they may be irreversibly damaged.

Due to the ongoing processes in the growing system, the pH level rises spontaneously above the optimum level. The pH parameter is therefore reduced by using additives in the form of citric acid, phosphoric acid, nitric acid, or specialized mixtures of suitable acids. In some cases, the pH level may need to be increased again, for which the hydroxide option is suitable.

The electrical conductivity parameter, which defines the amount of the dissolved mineral substances, is increased by specialized additives in the form of a fertilizer, often tailored to the plant species being grown. The reduction of the EC parameter is implemented by diluting the nutrient solution with pure or distilled water. If we consider a system with a sufficient volume of the nutrient solution compared to the amount of the plants being grown, we usually only increase the value of the given parameter by using additives.

The hydroponic system comprises a nutrient solution reservoir, a nutrient solution circulation system composed of a system of pipes for transporting the nutrient solution between the reservoir and the growing arms in which the plants are placed such that their root system, or a part of the root system, is in contact with the nutrient solution. There can be one hydroponic growing arm, or there can be several of them. The hydroponic growing arm comprises growing openings in which individual plants are placed in a manner such that their root system is immersed in the nutrient solution. The hydroponic growing arm can be tilted to create an inclination, or it can be level. The level in the hydroponic arm can reach different levels in different cases, depending on the method of growing and the plant species and their root systems. The hydroponic system further comprises a nutrient solution pump, which drives the nutrient solution in its circulation system, i.e. from the reservoir it is brought to the hydroponic arm via a pipe, from where it flows back into the reservoir. The reservoir further comprises at least one pump for adding the additive to the nutrient solution. The additive adjusts the pH and/or electrical conductivity of the nutrient solution. However, the hydroponic system may comprise other mechanisms as well which ensure that the nutrient solution is circulated around the root system of the plants being grown.

The hydroponic system can also exist in a flow-through version, where the nutrient solution does not circulate but only flows through the hydroponic arms and flows away, or in a version where the solution reaches the roots by capillary action, spraying or other similar methods.

The success of the method is largely dependent on the data set used and obtained in step *i* of the described method. The data set is obtained in the conditions of the training hydroponic system, which are comparable to the conditions of the controlled hydroponic system, where this control system will be eventually deployed in operation. The comparability of the conditions of these two systems increases the accuracy of the resulting approximation in direct proportion, i.e. the greater the similarity between the training and the controlled system, the greater the accuracy of the resulting approximated additive volumes. Comparable conditions means that the training and controlled hydroponic systems will have similar size, i.e. area and volume of the greenhouse, will comprise similar species and number of plants and will have similar hardware configuration of the hydroponic arms. A similar plant species means a plant species that has similar growing requirements with respect to nutrition, temperature requirements, etc. Furthermore, it is advisable to maintain a similar geographical location, meaning a comparable climatic zone. The hardware configuration of the growing arms means a set of properties of the growing arms that can affect the behavior of the system, namely the diameter of the arms and the height of the nutrient solution level, the spacing of the growing openings, the material of the arms, the color of the material, and the like.

The training hydroponic system comprises a control unit, further at least one sensor data-connected to the control unit, at least one additive pump data-connected to the control unit, and pH and conductivity probes of the nutrient solution. Preferably, the pH and conductivity probes are data-connected to the additive pump.

The data set comprises time dependence of the data obtained by the sensor and the volumes of at least one additive added to the nutrient solution. The data obtained by the sensor or sensors are data that describe the state of the surrounding environment or plant. The additive volumes are added automatically based on the pH and conductivity measurements of the nutrient solution using the pH probe and EC probe, alternatively, the additives are added manually by the greenhouse operator. The data from the sensor and the added additive volumes are stored in a data storage of the control unit, or in an external data storage, or in cloud. The control unit preferably comprises an artificial intelligence model. Alternatively, after the data set is created, the data are transferred to another control unit with the artificial intelligence model.

The artificial intelligence model processes the data obtained in the training hydroponic system in step *ii* and approximates the volumes of the additives being added. Next, the data are processed in order to optimize the model parameters based on the objective function in order to minimize the deviation between the approximated and actual dosing volumes of the at least one additive for the quality adjustment of the nutrient solution.

When selecting a suitable artificial intelligence model, it is again necessary to take into account the given application of the system. Appropriate selection criteria include computational requirements, memory requirements, ability to process sequential data, susceptibility to re-learning, and others. For the purpose of the approximation algorithm, one of the following versions can be considered, but not exclusively: polynomial function of the n-th order, Gaussian Mixture model, feedforward neural network, recurrent neural network, convolutional neural network. The selection of an appropriate model for data processing should be handled by an experienced person skilled in the art of artificial intelligence, but in general the following key criteria can be considered. The first is computational and memory requirements. Some models are directly excluded by the available control options of the given HW. Another criterion is the type of the input data. Some models are directly excluded by the type of the input data of the model, e.g. for image or sound data, linear regression is excluded and use of a convolutional neural network is considered. However, if we only have a temperature datum on the input, using a convolutional network does not make sense. Another criterion is the extent of the available data set with respect to the complexity of the model. Different models are differently demanding in terms of the amount of training data required.

The processes in the hydroponic system are modelled using an artificial intelligence model. The input to the method is data from sensors describing the growing environment for a selected time period and the real additive volumes added to the system in response to the current parameters of the growing environment. The output of the method is the prediction of the dosing volumes of the individual additives to be added to the nutrient solution. An advantage of direct regression of the dosing volumes instead of assumed pH and EC values is that not only are the processes in the growing system modelled, but also the behavior of the given additive after addition to the system is modelled, resulting in more accurate approximation results.

The next step is the deployment in operation in the controlled hydroponic system. The controlled hydroponic system is either comparable in the conditions to the training system, or it may be an identical system, in which case the method of controlling the conditions for the hydroponic system is deployed in operation in the same system in which the data set for training the artificial intelligence model was obtained. The controlled hydroponic system comprises the control unit with the artificial intelligence model trained in the training hydroponic system, at least one sensor data-connected to the control unit, at least one additive pump data-connected to the control unit. The sensor in the controlled hydroponic system captures the same type of data as the sensor in the training hydroponic system. The data obtained by the sensor in step *iii* are processed in step *iv* by the artificial intelligence model trained in the training hydroponic system and an approximation calculation is performed. The result of the present method is step v, i.e. the addition of the determined volume of additive to the nutrient solution. The addition of the additive is provided by the additive pump, preferably peristaltic, which is data-connected to the control unit that comprises the artificial intelligence module and processes the input data. At least one sensor is also data-connected to the control unit. There can be more additive pumps, but if the approximation curves are similar within the given operating range, there can also be only one pump.

Preferably a fixed data set is used, or an artificial intelligence model trained on a fixed data set, i.e. data obtained from the training hydroponic system. This model is not further trained and the approximation of the additive volume is performed based on still the same approximation function based on the processing of the data from the training hydroponic system. Alternatively, it is possible to modify the artificial intelligence algorithm to further learn in the specific controlled hydroponic system where it will be deployed. The learning is based on data from occasional manual measurements that the user inputs into a web application.

The sensor is at least one sensor of a group comprising a temperature sensor of the nutrient solution, a sensor sensing ultrasonic waves emitted by the plants, a camera for imaging the plants, a camera for imaging the nutrient solution, a temperature sensor inside the greenhouse, a temperature sensor outside the greenhouse, a relative humidity sensor inside the greenhouse, a relative humidity sensor outside the greenhouse, a solar intensity sensor, a CO₂ sensor. Which input data, or rather which sensor or sensors, will be used depends on the need for the given type of hydroponic system and the plant species. The sensor provides data describing the state of the growing environment in the hydroponic system that affects the plants being grown, or data that describe the state of the plants. Such data may be the temperature of the nutrient solution or the ambient air, images capturing the movements of the plants or the state of the leaves, the presence of pests, the visual state of the nutrient solution, etc., furthermore, such data may be acoustic emissions of plants, relative humidity in the growing environment, CO₂ concentration level, solar intensity, etc.

One of the most suitable methods seems to be the measurement of the temperature of the nutrient solution, mainly because of its low instrumentation and operator requirements. The temperature amplitude during the day partially correlates with the daily sunlight total and the temperature of the growing environment affects the growth rate of the plants and internal processes in the system.

Another very suitable method is the use of ultrasonic emissions of plants, since it is already a known fact that plants emit ultrasonic signals in response to stress, or the surrounding conditions. For example, as reported in the article "Sounds emitted by plants under stress are airborne and informative" (available at https://www.sciencedirect.com/science/article/pii/S0092867423002623), scientists have successfully classified the quality of watering or injury of plants based on ultrasonic signals. Because pH and EC influence the behavior of the root system of plants and the subsequent flow of substances in their bodies, their level is detectable from ultrasonic waves.

The approximation quality control of the nutrient solution represents a compromise between the current approaches. In this case, the need for continuous measurement of pH and EC parameters using expensive industrial probes is replaced by an approximation algorithm. Based on easily measurable parameters of the surrounding environment, the algorithm models the processes in the system and controls the peristaltic dispensers on the basis of this modelling, thereby continuously adjusting the composition of the nutrient solution within permissible limits without the need for direct measurement of these parameters. During the operation of the approximation dispenser, there may be some deviations compared to the direct measurement. However, given the lower acquisition costs, simplicity of operation, and robustness of the hardware, it is a very attractive option, especially for smaller scale implementations.

An advantage of this method is therefore the low acquisition costs of the technological equipment, the simplicity of operation and automation of adjustment of the nutrient solution, wherein the results show sufficient accuracy for use in private, home hydroponics.

### Description of Drawings

A summary of the invention is further clarified using exemplary embodiments thereof, which are described with reference to the accompanying drawings, in which:
fig. 1 is a chart representing a data set used to train the neural network,
fig. 2 is a chart of the processed input data,
fig. 3 is a chart of the approximated additive dosing function for EC adjustment,
fig. 4 is a demonstration of the growth of lettuce plants in various conditions,
fig. 5 is a chart of the approximated additive dosing function for pH adjustment,
fig. 6 is a chart of the dependence of the solubility of oxygen in water on its temperature,
fig. 7 are charts of temperature, PH, and EC patterns during the testing of the system of the invention,
fig. 8 shows schematically a controlled hydroponic system with connected control unit, sensors, and additive pump,
fig. 9 shows a diagram of the whole system.

### Exemplary Embodiments of the Invention

The invention will be further clarified using exemplary embodiments with reference to the respective drawings.

### Example 1

The implementation of the approximation algorithm assumes the creation of a data set describing the behavior of the training hydroponic system 9. The training hydroponic system 9 is comparable to systems designed for production deployment, with respect to maximizing the accuracy of the approximation. In particular, the hardware configuration of the growing arms 3, the total volume of the nutrient solution 2 in relation to the amount of the plants 5 being grown, the operating conditions of the growing system, and the types of additives used to adjust the pH and conductivity parameters are crucial for comparability. The hardware configuration of the arms 3 means a set of properties of the growing arms 3 that can affect the behavior of the system, specifically the diameter of the arms 3, the spacing of the growing openings, the material of the arms 3, the color of the material, and so on. Another important parameter is the type of the plants 5 being grown, which can also affect the used hardware configuration of the arms 3.

To determine the obtaining of the data set, growing arms 3 of a diameter of 75 mm with a level height of 35 mm in the arm 3 were used. The spacing of the growing openings was 15 cm. The material of the arms 3 was polypropylene of grey color.

The data set from the operation of the training hydroponic system 9 comprises the values obtained by the relevant sensors 6 of the training hydroponic system 9, the values of the actual pH and EC parameters of the nutrient solution 2 obtained by a pH probe 12 and an EC probe 13 together with the time stamps of the measured values with a recommended sensing interval of 60 seconds. The choice of the configuration of the sensors of the hydroponic system depends on the application for which the controlled hydroponic system 10 is intended.

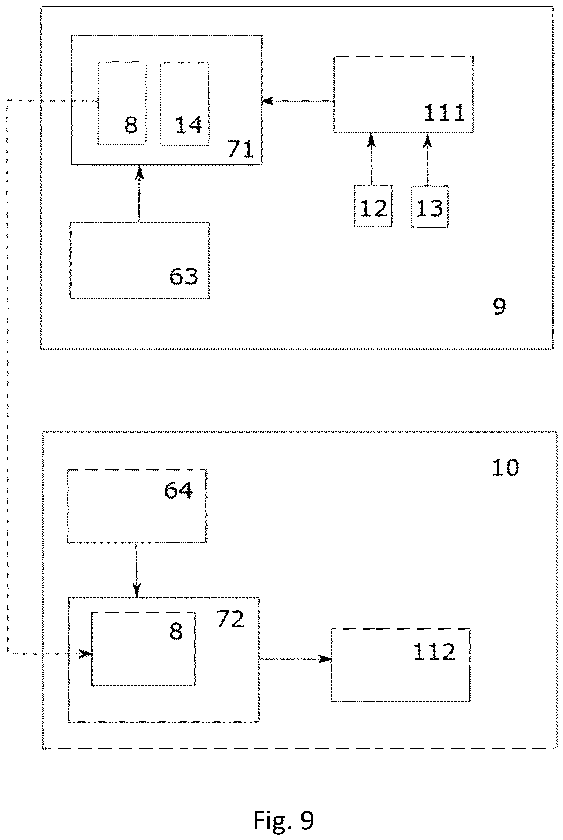

The configuration of the entire system is shown in the diagram in Fig. 9. The system comprises the training hydroponic system 9 and the controlled hydroponic system 10. The training hydroponic system comprises a control unit 7 and a sensor 6 of the controlled hydroponic system data-connected thereto, particularly a temperature sensor 6 of the nutrient solution and an additive pump 11. The control unit 7 comprises a data storage 14 and an artificial intelligence model 8, wherein the model 8 is trained on a testing and training data set. The training hydroponic system 9 comprises the pH probe 12 and the EC probe 13, which are data-connected to the additive pump 11 and based on their data the required volume of the additive is released into the nutrient solution 2.

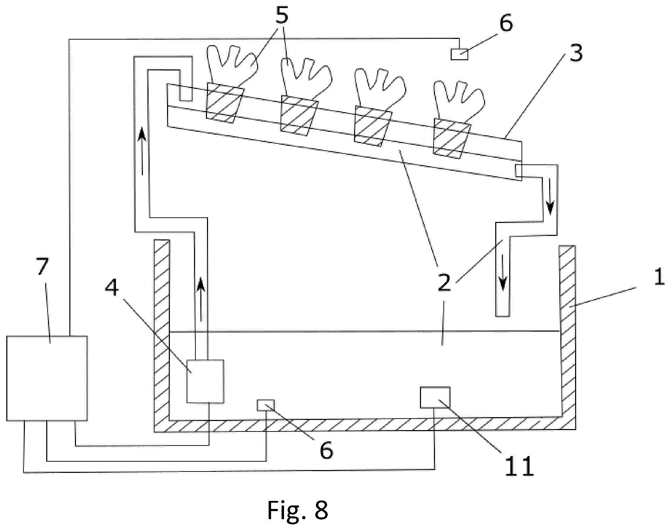

In the controlled hydroponic system 10 (see Fig. 8), the control unit 7 comprises an already trained artificial intelligence model 8. The sensor 6 and the additive pump 11 are data-connected to the control unit 7 of the controlled hydroponic system 10.

The hydroponic system of the presented experiment is designed for application in greenhouses with dimensions up to 40 m². Only temperature sensor 6 of the nutrient solution 2 was chosen for testing. Handling of the given sensor 6 can be performed even by a technically less skilled user, it requires low maintenance and is characterized by high reliability and low acquisition value. At the same time, the data from the sensor 6 provide essential information about the given growing environment. The temperature amplitude during the day partially correlates with the daily total of sunlight. The temperature of the growing environment further influences the growth rate of the plants 5 and the internal processes in the system. It can be assumed that an experienced expert, based on a thorough analysis of these data, would be able to assess how the given system and the plants 5 being grown would respond to given conditions and would be able to determine, at least approximatively, the appropriate dosing of the individual additives. Other relevant sensors 6 may include an outdoor temperature and humidity sensor (°C, %), an indoor temperature and humidity sensor (°C, %), solar intensity (W/m²)), CO₂ concentration (ppm), plant sound emission (dB), plant visual expression (RGB).

During the creation of the data set, the parameters of the nutrient solution 2 are kept within optimal limits by peristaltic pumps 11 based on the pH and EC values actually measured by the pH probe 12 and EC probe 13. The data set records the growing environment parameters and dosing volumes of the individual additives at regular intervals. When creating a data set, it is necessary to ensure its diversity, sufficient scope, elimination of external influences, and to respect the general guidelines for creating data sets. The following table shows the input values for creating a data set for testing operation of the system for controlling the conditions in the hydroponic system.

| **Parameter** | **Value** |
|---|---|
| Sensing time | 168 hours |
| Target pH level | 6.0 |
| Target EC level | 1.1 |
| pH- regulator | Terra Aquatica pH Down Sec (powder) |
| EC+ regulator | Jungle Garden Base + G1 |
| System volume | 60 liters |
| Number of plants | 120 |
| Plant species | Leaf and cruciferous vegetables |

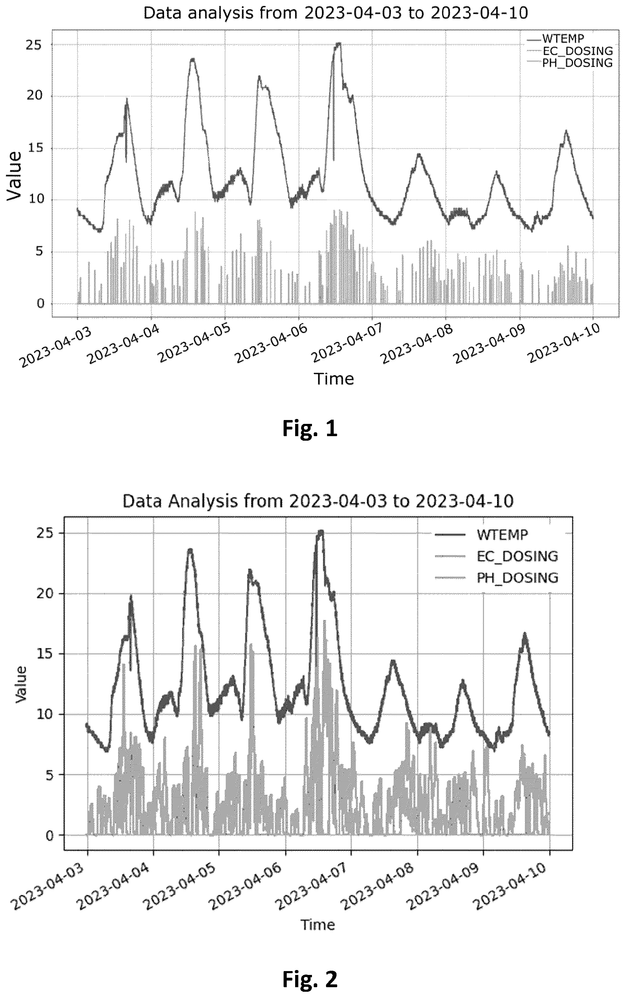

The processes in the hydroponic growing system are then modelled using a suitable artificial intelligence technique. The input of the selected method is the growing environment parameters for the selected time period and the real additive volumes added to the system in response to the current growing environment parameters, as shown in the chart in Fig. 1. The output of the method is the prediction of the dosing volumes of the individual additives to be added to the nutrient solution 2. An advantage of direct regression of the dosing volumes instead of assumed pH and EC values is that not only are the processes in the growing system modelled, but also the behavior of the given additive after addition to the system is modelled, thereby obtaining more accurate approximation results.

The data set is divided into a training and testing part. The training data are used to model the processes in the hydroponic system and the testing data set gives an idea of the achieved accuracy of the model, helping to detect possible overfitting and other training deficiencies. To improve the quality of the resulting model, noise (e.g. Gaussian) can be generated during the training process and added to the training data. In case of insufficient data set range, i.e., lack of the training data, the use of data augmentation is also possible. These general procedures make sense especially when dealing with more complex input data - for example, photograph time-lapse of a plant. Augmentation means generating new photograph samples by minor transformations such as rotation, brightness adjustment, mirror rotation, blurring, and so on.

The initial data on the amount of the dosed additives was aggregated in the first step using a sum realized by a sliding window of 60 min width, as can be seen in the chart in Fig. 2. The resulting data points therefore approximate the dosing volume for the individual additives in units of ml/hr. The data series were then smoothed using the Exponential Moving Average (EMA) method.

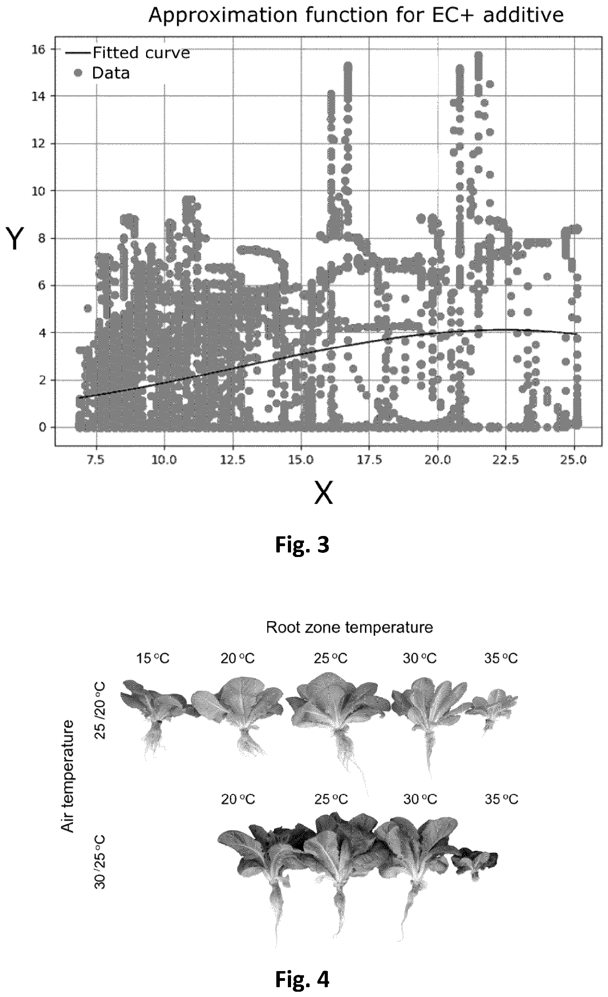

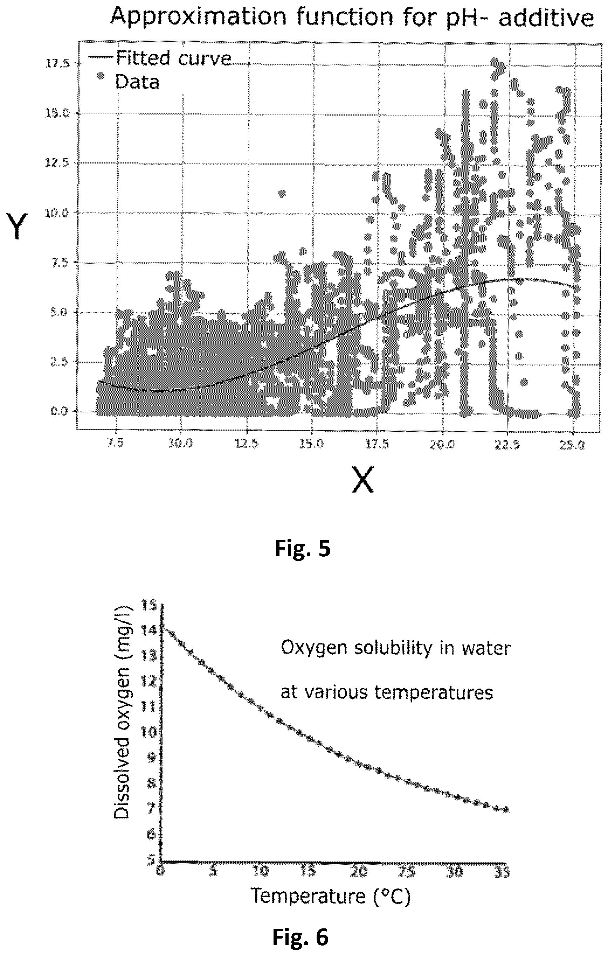

As a demonstration model of artificial intelligence, a polynomial function of 3rd order was chosen for the simplicity of the example, wherein the individual coefficients were obtained by the method of least squares. A separate approximation function was calculated for each of the additives. A chart of the approximation function for the pH additive can be seen in Fig. 3, a chart of the approximation function for the EC additive can be seen in Fig. 5.

For the obtained approximation function, it is worth noting that the dosing of nutrients in relation to the temperature of the nutrient solution approximately corresponds to the effect of temperature on the growing of the selected lettuce variety, which is illustrated in Fig. 4 (image source: https://www.researchgate.net/figure/Lettuce-Lactuca-sativa-L-var-longifolia-grown-under-different-growth-temperature_fig2_358625089). In both cases, the growth peak is achieved at a temperature between 20-25 °C.

From the obtained approximation function for the pH additive, a stronger increase in the dosed volumes with respect to the increasing temperature of the nutrient solution is evident. In addition to the biological processes themselves, physical factors also play a role here. As the temperature of water increases, its ability to hold dissolved oxygen decreases, as shown by the curve in the chart of Fig. 6.

The amount of the dissolved oxygen in the nutrient solution is crucial for the function of the root system, that is why its level is compensated for by an aeration system of a variable air flow of 0-600 I/h. However, the aeration of the nutrient solution causes an increase in pH that has to be compensated for by the given additive, which explains the shape of the curve obtained. Aeration does not have to be a component of the system, but at temperatures above 25 °C, it significantly helps the root system condition.

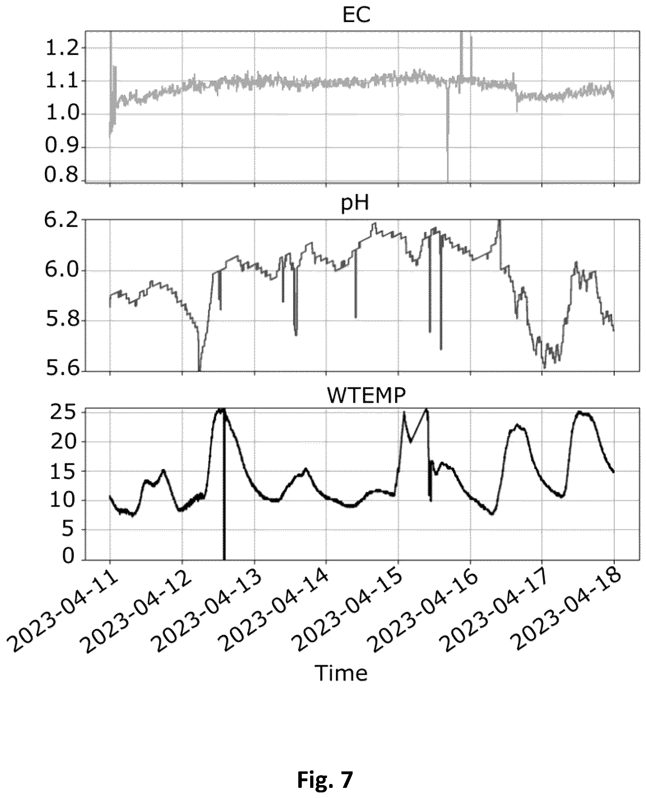

For 7 days, the artificial intelligence model 8 trained by the above method was then used to control conditions in the controlled hydroponic system 10. Based on the current temperature of the nutrient solution 2, an approximate value for the additive dosing was calculated every 15 minutes. The given volume of the additives was subsequently dosed into the system using peristaltic pumps 11. The pH probe and EC probe in this part of the experiment served only to verify the accuracy of the approximation dosing. The patterns of the charts of pH, EC, and temperature during the testing period can be seen in Fig. 7.

As a result, it was verified that the algorithm using the input in the form of the temperature of the nutrient solution 2 over a week maintained EC (conductivity) values in the interval of 1.02-1.12 and pH values in the interval of 5.6-6.2, which is completely in line with the given additive manufacturer's guidelines, which recommend maintaining the pH in the range of 5.8-6.2 and the EC (conductivity) in the range of 1.0-1.15 for lettuce plants. The results show that although the pH briefly decreased slightly below the limit determined by the manufacturer, the negative impact is negligible. Such short-term drops can also occur in industrial systems or with manual dosing.

After a certain period of operation, deviations may occur, however the system comprises the option for occasional manual checks and adjustments for such cases. The manual measurement parameters can also serve as input to the algorithm to achieve a more accurate approximation.

### Example 2

Another alternative embodiments of the invention comprises, compared to the embodiment of Example 1, instead of the temperature sensor 6 of the nutrient solution, an ultrasonic emission sensor 6 of the plants 5, which detects the ultrasonic waves emitted by the plants 5.

### Example 3

In this case, a convolutional neural network is chosen as the artificial intelligence model 8 for the data processing, preferably using dilated convolutions that better describe both short-term and long-term dependencies. The preparation of the system is done in the same way as in Example 1. The data from the ultrasonic emission sensor 6 and the volumes of the additives being added are recorded. After obtaining a sufficient volume of data for the data set, the data are processed using the artificial intelligence model 8 and the dependence between the ultrasonic emissions of the plants 5 and the additive volume is evaluated.

### Example 4

Another alternative is the use of an image sensor, i.e., a digital camera or a camera that would capture the state of the plants. A suitable data set is composed of a series of time-lapse images, from which the artificial intelligence model 8 then evaluates the movements performed by the plant. If the plant is growing well, it performs specific growth movements. A suitable model for processing this type of data is, without limitation, a convolutional neural network.

### Example 5

Another alternative is a multi-sensor system, where the basic temperature sensor of the nutrient solution and/or ultrasonic emission sensor and/or image sensor is supplemented by at least one additional sensor, e.g., air temperature sensor, sunlight intensity sensor, etc. Due to the computational configuration, only the number of input dimensions is expanded, which is reflected in the adjustment of the model architecture, otherwise the method is analogous to the previous alternatives.

### Example 6

Another alternative is to use more than one artificial intelligence model 8, an example of such an embodiment is an embodiment where the first artificial intelligence model models the pH and conductivity patterns and the second model processes the additive volume estimation based on the data from the first model.

### Example 7

In another example, the hydroponic system 9, 10 comprises an aquaponic pond for fish farming, wherein the pond functions as a reservoir 1 of the nutrient solution 2 for the hydroponic system 9, 10. The method of controlling conditions for the controlled hydroponic system 10 of this invention can also be applied for dosing feed for aquaponic fish farming.

The additives being dosed, in this case feed or other fish food, can be solid or liquid. In the training hydroponic system 9, a data set comprising a time dependence of the volumes of the additive being added and the data obtained by the sensor 6, preferably a camera capturing the pond level, is obtained. In the training hydroponic system 9, the additive was added to the training hydroponic system, specifically the aquaponic pond, until it was consumed by the fish.

In the controlled hydroponic system 10, the additive, preferably feed, is then dosed in volumes given by the approximation function obtained from the data set from the training hydroponic system 9.

### Industrial Applicability

The above described method can be used, in addition to the already mentioned home greenhouses of smaller dimensions, also in other hydroponic systems of smaller dimensions, such as hydroponic walls on balconies, roofs, restaurants, schools, hotels, and other foodservice establishments. It can also be used in hydroponic systems as a component of a decentralized growing network or for small local farmers, in family gardens, community greenhouses for cities, in indoor hydroponic growing systems. It can also be used in hydroponic growing systems in developing countries where growers lack the knowledge and finances to build industrial halls.

In general, local vegetables can be grown in hydroponic systems very efficiently all year round thanks to the fact that hydroponics can be heated efficiently compared to soil growing. In the case of an alternative embodiment of the control system comprising an internal temperature sensor of the growing environment and temperature sensor of the nutrient solution (i.e., version with a system of multiple sensors), the control unit can be used to maintain constant temperature of the environment by regulating the heating of the nutrient solution. Thus, the higher the heat loss of the growing environment, the more heat is concentrated in the surroundings of the plants, not in the whole greenhouse space, which significantly increases the economic efficiency of the given system.

### List of Reference Signs

1 - Reservoir
2 - Nutrient solution
3 - Arm
4 - Nutrient solution pump
5 - Plant
6 - Sensor
7 - Control unit
8 - Artificial Intelligence model
9 - Training hydroponic system
10 - Controlled hydroponic system
11 - Additive pump
12 - pH probe
13 - EC probe
14 - Data storage

## Claims

1. A method of controlling conditions for a controlled hydroponic system (10) using at least one artificial intelligence model (8), **characterized in that** it comprises the steps of
i. obtaining a data set in a training hydroponic system (9), wherein the data set comprises time dependence of data obtained by at least one sensor (6) and volumes of at least one additive added to the nutrient solution (2);
ii. processing the data set by the at least one artificial intelligence model (8), wherein the result is an approximation function of the volume of the at least one additive;
iii. obtaining data using the at least one sensor (6) in the controlled hydroponic system (10);
iv. processing the data obtained in step *iii* using the at least one artificial intelligence model (8), wherein the result is an approximated volume of the at least one additive;
v. adding the volume of the at least one additive to the nutrient solution (2) in the controlled hydroponic system (10), wherein this volume is determined in step *iv.*

2. The method of controlling conditions for a controlled hydroponic system according to claim 1, **characterized in that** the artificial intelligence model (8) is a polynomial function of the n-th order, a Gaussian Mixture model, a feedforward neural network, a recurrent neural network, or a convolutional neural network.

3. The method of controlling conditions for a controlled hydroponic system according to claims 1 to 2, **characterized in that** the sensor (6) is at least one sensor of a group comprising a temperature sensor of the nutrient solution, a sensor detecting ultrasonic waves emitted by the plants, a camera for imaging the plants, a camera for imaging the nutrient solution, a temperature sensor inside the greenhouse, a temperature sensor outside the greenhouse, a relative humidity sensor inside the greenhouse, a relative humidity sensor outside the greenhouse, a solar intensity sensor, a CO₂ sensor.
